# EUROPEAN PATENT APPLICATION

(11) **EP 3 024 171 A1**
(43) Date of publication of application: **25.05.2016**
(21) Application number: 13889693.1
(22) Date of filing: 16.07.2013
(51) Int. Cl.: H04L 9/10

(54) **SEMICONDUCTOR DEVICE**

(71) Applicant: Mitsubishi Electric Corporation, Tokyo 100-8310 (JP)
(72) Inventor: SUGAWARA, Takeshi, Tokyo 100-8310 (JP)
(74) Representative: Pfenning, Meinig & Partner mbB
(86) International application number: PCT/JP2013/069320
(87) International publication number: WO 2015/008335

(57) **Abstract**

Provided is a semiconductor device, including: an enable generating circuit (10) for generating an enable signal, being a pulse train in synchronization with a clock signal, and supplying the enable signal to a protection target circuit (30); and a first abnormality detecting circuit (20) for detecting an abnormality of clock timing due to introduction of a spike into the clock signal based on comparison between the clock signal and the enable signal generated by the enable generating circuit. Thus, a semiconductor device capable of detecting a local clock abnormality is obtained.

## Description

### Technical Field

The present invention relates to a security device for authentication processing, encryption processing, and the like, and to a semiconductor device for implementing a countermeasure against a specific attack on the security device.

### Background Art

In recent years, as more built-in devices represented by mobile phones are becoming subjected to networking, there is an increasing demand for the built-in device to perform processing involving information security in order to maintain concealment of data handled by the built-in device and integrity thereof, and authenticate the built-in device itself. Such processing involving the information security is implemented by an encryption algorithm or an authentication algorithm.

It is a major premise in execution of the encryption algorithm and the authentication algorithm that each device "securely" performs a calculation. Here, the term "securely" means that it is difficult for a person who is not legitimately allowed to access the device to read or tamper with key information. For securely performing the calculation, an implementation system that keeps a calculation content concealed even from attackers who intrude into the device itself is required.

Among the attacks, there exists an attack that intentionally induces a calculation error in the built-in device in a decryption attempt (hereinafter such an attack is referred to as "fault attack"). The above-mentioned fault attack is a technique of inducing a calculation error in a target circuit by a physical stimulus and observing a behavior thereof for decryption. Error insertion methods have a wide variety and include, as a representative one, a method of inserting a spike into a clock signal to be input to a circuit. The above-mentioned clock signal containing the spike is known to cause malfunction of the target circuit as a consequence.

Countermeasure technologies against the fault attack have been devised so far. The countermeasure technologies are roughly classified into two, namely, (i) detection of the calculation error, and (ii) detection of an abnormal state. The detection of the calculation error classified as (i) is a technique of discovering a calculation error through verification or an error detecting code to interrupt or correct processing. Examples of the technique include, for example, Patent Literature 1.

The other detection of the abnormal state classified as (ii) is a technique of mounting a sensor or the like to detect an abnormal operating environment in which a calculation error may be caused. For detection of a clock signal abnormality, for example, Non Patent Literature 1 may be mentioned. For detection of laser irradiation or the like, for example, Patent Literature 2 may be mentioned.

### Citation List

### Patent Literature

[PTL 1] JP 2009-278576 A
[PTL 2] JP 2004-206680 A
[PLT 3] JP 63-310211 A

### Non Patent Literature

[NPL 1] N. Selmane, S. Bhasin, S. Guilley, T. Graba, and J.-L. Danger, "WDDL is Protected against Setup Time Violation Attacks", FDTC2009.
[NPL 2] T. Sugawara, N. Homma, T. Aoki, and A. Satoh, "High-performance Architecture for Concurrent Error Detection for AES Processors", IEICE Trans. Fundamentals of Electronics, Communications and Computer Sciences, Vol. E94-A, No. 10, pp. 1971-1980, October, 2011.
[NPL 3] Y Li, K. Sakiyama, S. Gomisawa, T. Fukunaga, J. Takahashi, K. Ohta: Fault Sensitivity Analysis. CHES 2010: 320-334

### Summary of Invention

### Technical Problem

However, the related art has the following issues.

Although the countermeasure technologies have been developed as described above, there remains a problem in that there still exist attacks that cannot be sufficiently prevented by the existing countermeasure technologies. For (i) the detection of the calculation error, there is a fear in that a specific error cannot be detected. As an example, in Non Patent Literature 2, it is described that, when two errors are successively inserted (timing double fault), error detection capability described in Patent Literature 1 is limited.

Further, it is known that, if, for example, an attack method called "fault sensitivity analysis" described in Non Patent Literature 3 is used, an attack can be carried out even with the verification.

On the other hand, as a method of (ii) the detection of the abnormal state, it is conceivable that error irradiation using the laser irradiation or the like may bypass the sensor. Further, although there exists a technique of detecting the laser irradiation by an optical sensor as described in Patent Literature 2, there is still a risk of missing local irradiation.

Further, although there exists a device for detecting a local clock abnormality as described in Patent Literature 3, the invention is only to handle an abnormal system of a normal circuit. Therefore, fault insertion by a malicious attacker cannot be prevented.

The issues of the related art are sorted out as the following four problems.
(Problem 1) There exist attack methods (such as a multiple fault and the fault sensitivity analysis) that cannot be coped with by the verification and the error detecting code.
(Problem 2) Bypassing the sensor.
(Problem 3) Both edges cannot be used.
(Problem 4) Construction with a standard cell is impossible.

First, Problem 1 is described. The countermeasures using the verification and the error detecting code have two issues. The first issue lies in possibility of failing to detect the multiple fault. When a plurality of errors are inserted simultaneously, there is a possibility that not only a calculation to be protected but also the verification and a calculation of the error detecting code simultaneously fail. As a result, a condition that should be detected as an error is missed, resulting in the possibility of failing to detect the error.

The second issue lies in that the fault sensitivity analysis cannot be prevented. A conventional fault attack is carried out by analysis of an output containing an error, and therefore can be coped with by detecting the error and suppressing output of an erroneous calculation result.

With the fault sensitivity analysis, however, an attack is carried out by using information of whether the calculation is erroneous or not erroneous alone. The information of "whether the calculation is erroneous or not erroneous" is output to an outside even when the error detection is successful through the verification or the error detecting code. Thus, even if the countermeasure using the verification or the error detecting code is present, the attack is successfully made.

Next, Problem 2 is described. The countermeasures using the sensor have a possibility of failing to detect a local error. Specifically, there is a possibility of application of an error insertion method that causes an error only in the target circuit without affecting the sensor.

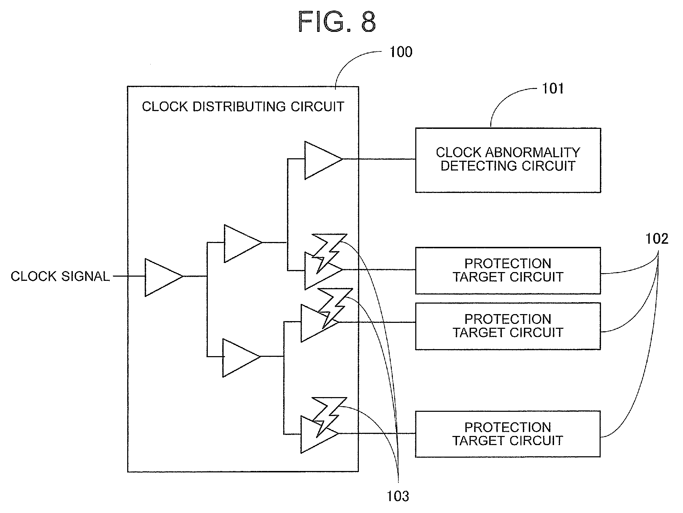

As an example thereof, a local error due to clock abnormality is described. FIG. 8 is an explanatory diagram for illustrating a mechanism of bypassing a clock abnormality detecting circuit in the related art. In a general circuit, the clock signal supplied from an outside of a chip is supplied to each circuit after being amplified by a clock distribution circuit 100. A clock abnormality detecting circuit 101 is mounted to one of terminals of the clock distribution circuit 100. In this case, protection target circuits 102 are connected to terminals of the clock distribution circuit 100, which are different from that connected to the clock abnormality detecting circuit.

The attacker applies a physical stimulus to a part of the clock distribution circuit 100 by means such as laser irradiation. As a result, an abnormality can be caused in clocks supplied to the protection target circuits 102 without applying a stimulus to the clock abnormality detecting circuit 101. At this time, the clock supplied to the clock abnormality detecting circuit 101 is normal, and hence the abnormality cannot be detected.

Next, Problem 3 is described. A circuit that operates in synchronization with the clock detects a rise or a fall of a clock signal, or both thereof to operate. In a related-art method of detecting an abnormality of the clock signal as described in Non Patent Literature 1, the operation is performed only at any one of the rise and the fall of the clock in terms of the configuration. Therefore, there is a problem in that the method cannot be applied to a circuit that uses both the rise and fall of the clock signal.

Next, Problem 4 is described. In general digital circuit design, circuits are designed by using a standard cell (general-purpose circuit component) provided by a semiconductor manufacturer. However, it is difficult to construct the detection circuits described in Patent Literature 2 and Patent Literature 3 by using the standard cell. When the construction with the standard cell is impossible, special designing is required. A rise in design costs and manufacturing costs becomes a problem as a consequence.

The present invention has been made to solve the problems described above, and therefore has an object to provide a semiconductor device capable of detecting a local clock abnormality.

### Solution to Problem

According to one embodiment of the present invention, there is provided a semiconductor device, including: an enable generating circuit for generating an enable signal, being a pulse train in synchronization with a clock signal, and supplying the enable signal to a protection target circuit; and a first abnormality detecting circuit for detecting an abnormality of clock timing due to introduction of a spike into the clock signal based on comparison between the clock signal and the enable signal generated by the enable generating circuit.

### Advantageous Effects of Invention

According to the one embodiment of the present invention, the semiconductor device capable of detecting the local clock abnormality by including the abnormality detecting circuit capable of detecting the spike introduced into the clock signal based on a logical operation of the enable signal in synchronization with the clock signal and the clock signal itself may be obtained.

### Brief Description of Drawings

FIG. 1 is a diagram for illustrating a configuration of a semiconductor device according to a first embodiment of the present invention.
FIG. 2 is a diagram for illustrating an internal configuration and an operation of an enable generating circuit according to the first embodiment of the present invention.
FIG. 3 is an explanatory diagram when an error is caused in a clock buffer according to the first embodiment of the present invention.
FIG. 4 is a diagram for illustrating an internal configuration and an operation of an abnormality detecting circuit according to the first embodiment of the present invention.
FIG. 5 is a diagram for illustrating a configuration of a semiconductor device according to a second embodiment of the present invention.
FIG. 6 is a diagram for illustrating a configuration of a semiconductor device according to a third embodiment of the present invention.
FIG. 7 is a diagram for illustrating a configuration of a semiconductor device according to a fourth embodiment of the present invention.
FIG. 8 is an explanatory diagram for illustrating a mechanism of bypassing a clock abnormality detecting circuit in the related art.

### Description of Embodiments

Now, a description is given of a semiconductor device according to preferred embodiments of the present invention with reference to the drawings.

### First Embodiment

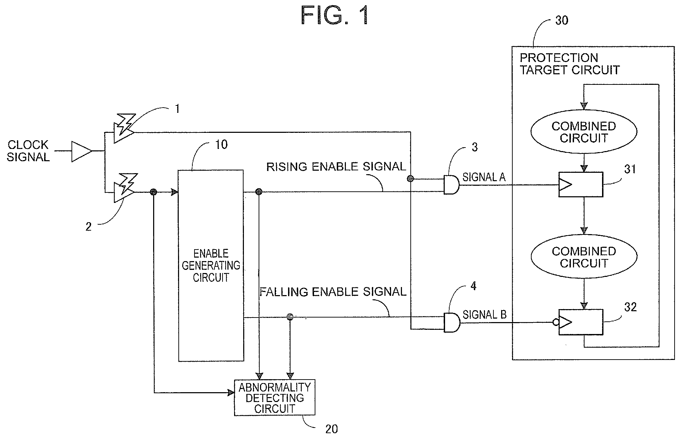

FIG. 1 is a diagram for illustrating a configuration of a semiconductor device according to a first embodiment of the present invention. The semiconductor device according to the first embodiment of the present invention includes an enable generating circuit 10 and an abnormality detecting circuit 20 (corresponding to a first abnormality detecting circuit), and prevents or detects malfunction of a protection target circuit 30 by using the above-mentioned circuits.

The protection target circuit 30 includes one of or both of a register 31 operating at a rising edge and a register 32 operating at a falling edge. To the register 31 operating at the rising edge, a clock signal and a rising enable signal, which have passed through an AND gate 3, are connected. To the register 32 operating at the falling edge, a clock signal and a falling enable signal, which have passed through an AND gate 4, are connected.

Each of the rising enable signal and the falling enable signal is a pulse train generated by the enable generating circuit 10 in synchronization with the clock signal, and the details thereof are described later. The clock signals are supplied from an outside to the enable generating circuit 10 and the abnormality detecting circuit 20 through clock buffers 1 and 2.

Next, a behavior in the circuit configuration illustrated in FIG. 1 in a case where an error is inserted into the clock signal is described. The error has a possibility of being caused in the clock buffer 1 or 2, or both thereof. When a spike is inserted into the clock buffer 1, there is a possibility that the error can be blocked by the AND gates 3 and 4.

On the other hand, when the spike is inserted into the clock buffer 2, the spike can be detected by the abnormality detecting circuit 20. The details of a method of blocking and detecting an abnormality are described later. Even when the errors are simultaneously caused in both the clock buffers 1 and 2, similar abnormality detection can be performed in each.

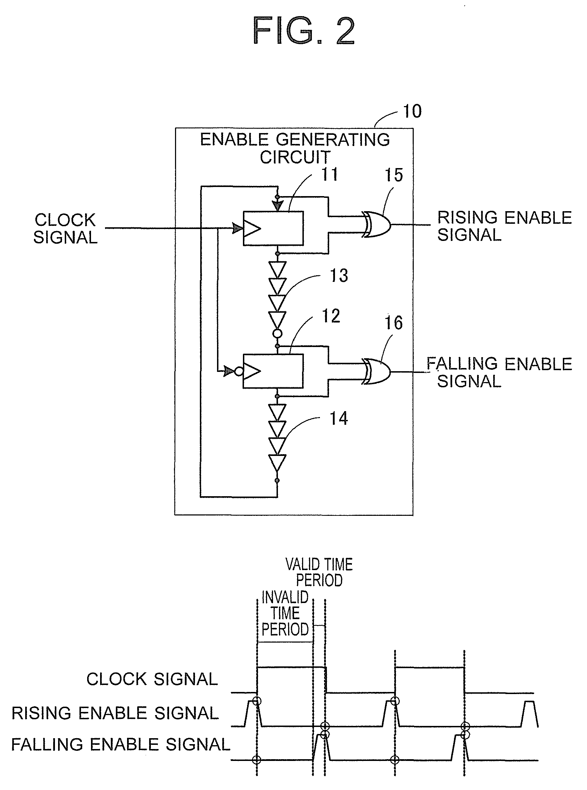

FIG. 2 is a diagram for illustrating an internal configuration and an operation of the enable generating circuit 10 according to the first embodiment of the present invention. The enable generating circuit 10 includes registers 11 and 12, delay circuits 13 and 14, and XOR gates 15 and 16. The enable generating circuit 10 having the configuration described above receives the clock signal from the outside and outputs the rising enable signal and the falling enable signal.

As illustrated in a timing chart in a lower part of FIG. 2, each of the rising enable signal and the falling enable signal is the pulse train that is in synchronization with the clock. In the following, an interval in which the enable signals are both Low is referred to as "invalid interval," and an interval in which one of the enable signals is High is referred to as "valid interval." A ratio of the invalid intervals and the valid intervals is controlled by time periods delayed by the delay circuits 13 and 14. Each of the delay circuits 13 and 14 can be configured through cascade connection of buffers, as illustrated in FIG. 2.

For the cascade-connection, the delay time can be designed by the number of buffers to be connected. The delay time is designed in accordance with the following requirements. First, the invalid interval is set longer than maximum delay time of the protection target circuit 30. The valid interval is designed as short as possible. The invalid interval, which is set longer than the maximum delay time of the protection target circuit 30, ensures that the valid interval starts after completion of computation by the protection target circuit 30.

Although the circuit illustrated in FIG. 2 has a feature in that the circuit can be constructed with a small number of circuit elements, a variable delay circuit for a different purpose of use is provided depending on a circuit to which the present invention is to be applied in some cases. In this case, the enable generating circuit 10 can be replaced by the variable delay circuit.

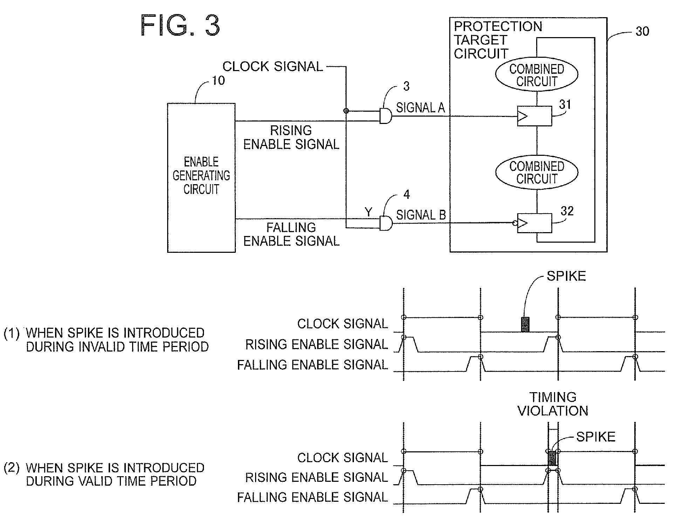

Next, the operation performed when the error is caused in the clock buffer 1 illustrated in FIG. 1 is described in further detail. FIG. 3 is an explanatory diagram when the error is caused in the clock buffer 1 according to the first embodiment of the present invention. Possible behaviors are classified into two. Specifically, a behavior when the spike is inserted during the interval in which the enable is Low (invalid time period), and a behavior when the spike is inserted during the interval in which the enable is High (valid time period).

First, the case of introducing the illustrated spike during the invalid time period is considered. At the time of introduction, the rising enable signal has not reached yet. Therefore, an output (signal A) of the AND gate 3 or an output (signal B) of the AND gate 4 remains Low. Therefore, the introduced spike disappears without propagating to the outputs of the AND gates 3 and 4. As a result, the error insertion is ignored, and hence a calculation error is not caused.

Next, the case of introducing the spike during the valid time period is considered. In this case, the clock into which the spike is inserted is not blocked by the AND gates 3 and 4, and therefore the spike reaches the protection target circuit 30. Such a spike causes timing violation of the protection target circuit 30, resulting in successful error insertion.

By designing the valid time period as short as possible, however, the implementation of an attack (ex: fault sensitivity analysis) requiring an accurate timing operation for the spike insertion can be made difficult. Further, a measure for detecting the spike insertion during the valid time period as described above is described in detail in a second embodiment of the present invention described later.

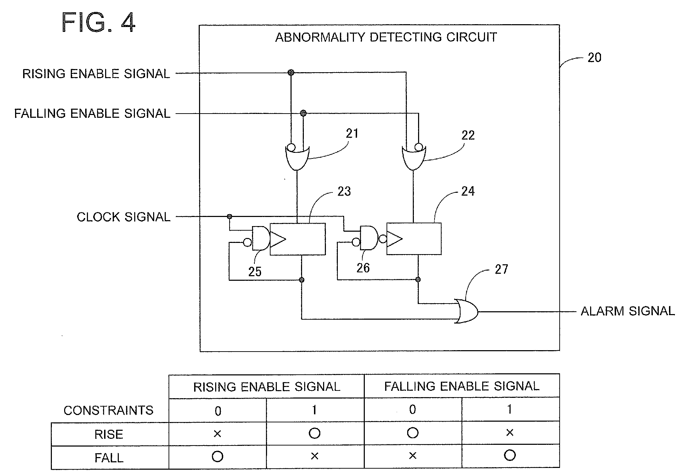

FIG. 4 is a diagram for illustrating an internal configuration and an operation of the abnormality detecting circuit 20 according to the first embodiment of the present invention. The abnormality detecting circuit 20 in the first embodiment includes OR gates 21 and 22, registers 23 and 24, AND gates 25 and 26, and an OR gate 27. The abnormality detecting circuit 20 receives the rising enable signal, the falling enable signal, and the clock signal, and outputs an alarm signal based on the result of comparison therebetween.

The abnormality detection is performed based on a table of constrains shown in a lower part of FIG. 4. In the table, a normal system is marked with ○, and an abnormal system is marked with ×. Specifically, an input marked with × is generated only when the error is inserted. Therefore, by detecting the input marked with ×, an abnormal input can be detected. The abnormality detecting circuit 20 illustrated in FIG. 4 is an example of the circuit configuration for performing the detection operation described above.

A construction method using the OR gates 21 and 22 illustrated in FIG. 4 is an example of implementation, and another logic circuit exerting similar performance can be used instead. Further, outputs of the registers 23 and 24 are set to Low at the time of resetting, and are continuously kept Low as long as no abnormality is caused. In the abnormal system, outputs of the OR gates 21 and 22 are 1, and the values are fetched into the registers 23 and 24.

The outputs of the registers 23 and 24 are fed back to clock ports of the registers 23 and 24 through the gates 25 and 26. By the feedback, once High is fetched, the registers 23 and 24 continuously keep 1 unless resetting is performed. As a result, the alarm signal is set to High when the error is caused and is kept High until a reset input is received. Owing to this property, the abnormality detecting circuit 20 is prevented from performing false detection due to multiple error.

As described above, according to the first embodiment, there is provided the abnormality detecting circuit capable of detecting the spike introduced during the invalid time period based on the enable signals generated by the enable generating circuit and the clock signal. Further, by designing the valid time period as short as possible, the implementation of the attack requiring the accurate timing operation for the spike introduction can be made difficult. As a result, the semiconductor device capable of detecting the local clock abnormality can be realized.

### Second Embodiment

In the second embodiment, a specific configuration of a semiconductor device capable of detecting the insertion of the spike during the valid time period is described.

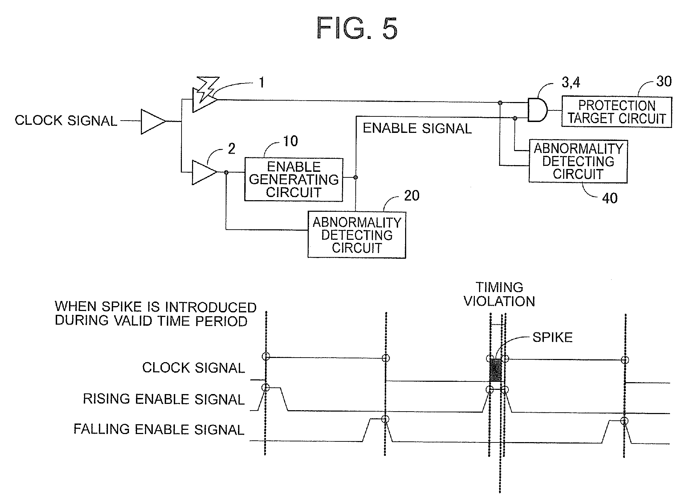

FIG. 5 is a diagram for illustrating a configuration of a semiconductor device according to the second embodiment of the present invention. The configuration according to the second embodiment, which is illustrated in FIG. 5, is different from the configuration according to the first embodiment, which is illustrated in FIG. 1 referred to above, in that an abnormality detecting circuit 40 (corresponding to a second abnormality detecting circuit) is additionally provided. By providing the plurality of abnormality detecting circuits (20, 40) as described above, an effect of a countermeasure against the local clock abnormality can be enhanced. Specifically, by additionally providing the abnormality detecting circuit 40, even the spike during the valid time period described above referring to FIG. 3 can be detected.

An operation of the semiconductor device according to the second embodiment in the case where the spike is introduced during the valid time period is described referring to a timing chart illustrated in a lower part of FIG. 5. The spike that is introduced during the valid time period corresponds to an input state marked with × in the table of constraints of FIG. 4 referred to above. Therefore, when the spike is introduced into the clock buffer 1 (corresponding to a second clock buffer) even during the valid time period, the spike can be detected by the abnormality detecting circuit 40. By appropriately processing the alarm signal that is the output of the abnormality detecting circuit 40, not only a level of difficulty of the error insertion is raised, but the error insertion can be made impossible.

As described above, according to the second embodiment, there is provided the second abnormality detecting circuit capable of detecting the spike that is introduced during the valid time period based on the enable signals generated by the enable generating circuit and the clock signal that is not supplied to the enable generating circuit. As a result, the semiconductor device capable of enhancing the effects of detection of the local clock abnormality to be higher than those of the first embodiment described above can be realized.

### Third Embodiment

In a third embodiment of the present invention, a case where the alarm signal that is the output of the abnormality detecting circuit 20 (or the abnormality detecting circuit 40) is reflected in the enable signal to be supplied to the protection target circuit 30 is described.

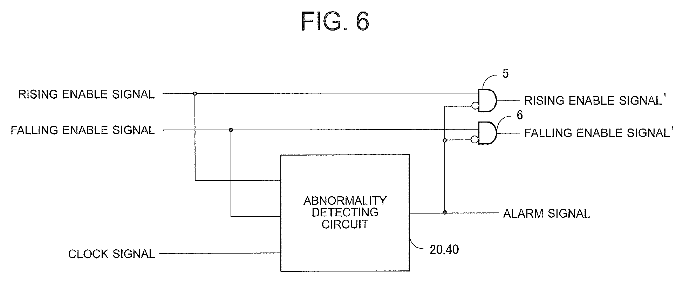

FIG. 6 is a diagram for illustrating a configuration of a semiconductor device according to the third embodiment of the present invention. In the third embodiment, an example of a method of using the alarm signal is described. In a configuration of the third embodiment illustrated in FIG. 6, AND gates 5 and 6 are additionally provided to the abnormality detecting circuit 20 (40).

The AND gates 5 and 6 respectively mask the rising enable signal and the falling enable signal, which are inputs, by the alarm signal output from the abnormality detecting circuit 20 (40). When the abnormality detecting circuit 20 (40) detects the abnormality, the alarm signal is fixed to High. Then, a rising enable signal' and a falling enable signal', which are output of the AND gates 5 and 6, are fixed to zero. As a result, the protection target circuit 30, which operates with the clock masked by the rising enable signal' and the falling enable signal', cannot fetch a value after the abnormality is detected by the abnormality detecting circuit 20 (40).

As a result, the abnormality detecting circuit 20 (40) and the protection target circuit 30 stop operating until resetting is performed again. With this configuration, the protection target circuit 30 is automatically stopped. In this manner, according to the third embodiment, the alarm signal output from the abnormality detecting circuit 20 (40) can be effectively used only by a small number of circuits (AND gates 5 and 6).

As described above, according to the third embodiment, there is provided the configuration capable of masking the enable signals to be supplied to the protection target circuit by using the alarm signal generated by the abnormality detecting circuit with a simple circuit configuration. As a result, when the spike is inserted into the clock signal, the protection target circuit can be automatically stopped.

### Fourth Embodiment

In a fourth embodiment of the present invention, a case where the effect of the countermeasure against the local clock abnormality is further enhanced by multiplexing the abnormality detecting circuits 20 is described.

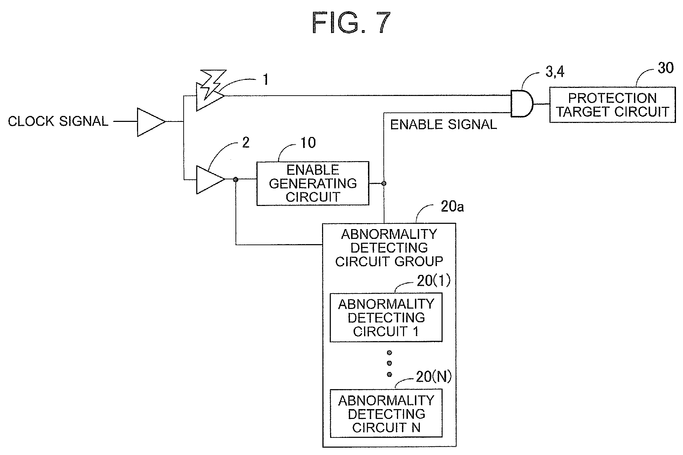

FIG. 7 is a diagram for illustrating a configuration of a semiconductor device according to the fourth embodiment of the present invention. The configuration of FIG. 7 according to the fourth embodiment corresponds to a case where the abnormality detecting circuits 20 are multiplexed in the configuration of the first embodiment, which is illustrated in FIG. 1 referred to above, or the configuration of the second embodiment, which is illustrated in FIG. 5 referred to above.

An abnormality detecting circuit group 20a of the fourth embodiment includes a plurality of abnormality detecting circuits 20(1) to 20(N) (N is an integer equal to or larger than 2). The abnormality detecting circuit 20 described above in the first to third embodiments detects an abnormal state and stores the result thereof in the register. Therefore, an attacker who directly rewrites the register has a possibility of invalidating the result. On the other hand, in the fourth embodiment, the abnormality detecting circuit group 20a includes the plurality of abnormality detecting circuits 20(1) to 20(N) to achieve the configuration in which the abnormality detecting circuits 20 are multiplexed. As a result, the attacker is required to cause an error in all the abnormality detecting circuits, resulting in the raised level of difficulty of the attack.

As described above, according to the fourth embodiment, there is provided the configuration in which the abnormality detecting circuits are multiplexed. As a result, the semiconductor device capable of raising the level of difficulty of the attack even for the attacker who directly rewrites the register and detecting the local clock abnormality can be obtained, while reliability thereof can be improved.

Although the present invention can be used at both edges, the present invention is also applicable to a system using only one of the edges by using the rising enable signal alone. As a result, a plurality of protection targets can be protected by one kind of circuits.

Further, the protection target circuit 30 can be provided with a verification function as a countermeasure against a fault attack.

## Claims

1. A semiconductor device, comprising:
an enable generating circuit for generating an enable signal, being a pulse train in synchronization with a clock signal, and supplying the enable signal to a protection target circuit; and
a first abnormality detecting circuit for detecting an abnormality of clock timing due to introduction of a spike into the clock signal based on comparison between the clock signal and the enable signal generated by the enable generating circuit.

2. A semiconductor device according to claim 1, wherein the enable generating circuit comprises a register and a delay circuit, and generates the enable signal as the pulse train having a desired pulse width in synchronization with the input clock signal.

3. A semiconductor device according to claim 1 or 2, wherein, when detecting the abnormality of the clock timing, the first abnormality detecting circuit outputs an alarm signal for maintaining an abnormal state until a reset signal is received.

4. A semiconductor device according to any one of claims 1 to 3, further comprising:
a first clock buffer for supplying the clock signal to the enable generating circuit;
a second clock buffer connected in parallel to the first clock buffer, for suppling the clock signal; and
a second abnormality detecting circuit for detecting the abnormality of the clock timing due to the introduction of the spike into the clock signal passing through the second clock buffer based on comparison between the clock signal output from the second clock buffer and the enable signal generated by the enable generating circuit.

5. A semiconductor device according to any one of claims 1 to 4, wherein the first abnormality detecting circuit is configured by multiplexing circuits for detecting the abnormality of the clock timing.

6. A semiconductor device according to claim 3, further comprising an AND circuit for outputting an enable signal to be supplied to the protection target circuit through logical AND of the enable signal generated by the enable generating circuit and the alarm signal generated by the first abnormality detecting circuit, and stopping the enable signal to be supplied to the protection target circuit while the abnormal state is maintained.
